# EUROPÄISCHE PATENTANMELDUNG

(11) **EP 2 389 808 A1**
(43) Veröffentlichungstag der Anmeldung: **30.11.2011**
(21) Anmeldenummer: 11401527.4
(22) Anmeldetag: 30.05.2011
(51) Int. Cl.: A21B 3/04, F24C 14/00

(54) **Einrichtung zur Wärmebehandlung von Lebensmitteln**

(30) Priorität: 31.05.2010 DE 202010005532 U
(71) Anmelder: DEBAG Deutsche Backofenbau GmbH, 02625 Bautzen (DE); Lidl Stiftung & Co. KG, 74172 Neckarsulm (DE)
(72) Erfinder: Piontek, Karsten, 02999 Lohsa (DE); Seeliger, Gandolf, 69151 Neckargemünd-Dilsberg (DE)
(74) Vertreter: Hofmann, Klaus

(57) **Zusammenfassung**

Die Erfindung betrifft eine Einrichtung zur Wärmebehandlung von Lebensmitteln, insbesondere eine Einrichtung, bei der Kondensat oder Reinigungsflüssigkeiten in größerem Umfang anfallen. Zum Anwendungsgebiet zählen Einrichtungen zum Backen, Garen oder Dämpfen, beispielsweise Ladenbacköfen oder Kombidämpfer.

Die erfindungsgemäße Einrichtung besteht aus einem Wärmebehandlungsgerät (2) und einem Unterbauschrank (1). Die Einrichtung besitzt eine Bedampfungseinrichtung und/oder ein Reinigungssystem für das Wärmebehandlungsgerät. Im Wärmebehandlungsgerät anfallendes Kondensat und/oder anfallende Reinigungsflüssigkeit wird über mehrere Rohrleitungen (30) in den Unterschrank (1) geleitet, wo sich ein Abwassertank (4) zur Aufnahme des Kondensates und/oder der Reinigungsflüssigkeit befindet. Der Abwassertank (4) ist in eine mobile Tankvorrichtung (3) integriert, die aus einem verfahrbaren Bodenträger (34) besteht, auf dem der Abwassertank (4) befestigt ist.

## Beschreibung

Die Erfindung betrifft eine Einrichtung zur Wärmebehandlung von Lebensmitteln, insbesondere eine Einrichtung, bei der Kondensat oder Reinigungsflüssigkeiten in größerem Umfang anfallen. Zum Anwendungsgebiet zählen Einrichtungen zum Backen, Garen oder Dämpfen, beispielsweise Ladenbacköfen oder Kombidämpfer für Bäckereien, Gastronomiebetriebe, Metzgereien, Bistros, Bars, Shops oder Tankstellen.

Bei der Wärmebehandlung von Lebensmitteln, beispielsweise dem Backen, wird bei Erfordernis Wasserdampf dem Prozess zugeführt. Diese, als auch die in den Lebensmitteln enthaltene Feuchtigkeit, wird bei der Wärmebehandlung zu einem Teil wieder frei und entweicht aus dem Gerät mittels eines Abdampfabganges. In den Abdampfleitungen und im eventuell vorhandenen Abdampfkondensator kondensiert ein erheblicher Teil und wird in den Kondensatleitungen abgeführt.

Hat das Gerät zur Wärmebehandlung ein eigenes Reinigungssystem, welches Reinigungsmittel und Wasser nutzt, entsteht auch hier eine Menge an Flüssigkeit, welche abgeleitet werden muss.

Bisher werden die Flüssigkeiten in am Gerät vorhandene Abwasseranschlüsse eingeleitet. In EP 1 209 419 A3 ist ein Reinigungssystem für einen Ofen sowie ein Verfahren zur Ofenreinigung beschrieben, bei dem anfallendes Abwasser an einen Abwasserkanal angeschlossen ist.

Ist bauseitig kein Abwasseranschluß vorhanden können über zu installierende Hebeanlagen und Rohrleitungen die Flüssigkeiten bis zur Abwasserleitung gebracht werden.

Bekannt sind auch Lösungen mit einem Auffangbehälter unterhalb des Wärmebehandlungsgerätes, beispielsweise in einem Unterbau oder hinter dem Gerät. Dieser Auffangbehälter ist in der Regel ein Kunststoffeimer, welcher regelmäßig überwacht und geleert werden muss.

DE 10 2006 031 581 A1 beschreibt eine Vorrichtung zur Wärmebehandlung mit einem beheizten Garraum und einem Bodenauslauf zur Ableitung von Fett und Gallerte in einen Auffangbehälter unterhalb des Garraumes.

Ein Ofen mit zwei Gehäuseteilen ist beispielsweise in DE 10 2004 038 878 B4 beschrieben. Der Backofen ist im oberen Gehäuseteil und ein Speicher im unteren Gehäuseteil untergebracht.

Geräte zur Wärmebehandlung von Lebensmitteln können nur dort aufgestellt und betrieben werden, wo ein Abwasseranschluss vorhanden ist. Sie sind daher ortsgebunden. Der Aufstellort so eines Gerätes muss bauseitig geplant werden und kann nicht ohne zusätzlichen Mehraufwand verändert werden.

Ist kein Abwasseranschluss vorhanden, sind erhebliche Aufwendungen notwendig, um mit einer Hebeanlage und Rohrleitungen das Entsorgen der Flüssigkeiten zu ermöglichen. Hier ist auch das Risiko für Ausfälle der gesamten Anlage durch Störung an der Hebeanlage oder undichte oder defekte Leitungen gegeben. Sofern die Geräte durch Einbau schlecht zugänglich sind, können die Ausfallzeiten erheblich sein. Die Folge wäre ein sinkender Umsatz oder eine Kundenverärgerung, weil Ware fehlt.

Bei einer Nutzung von einfachen Auffangbehältern besteht die permanente Gefahr des Überlaufens. Die Füllmenge ist begrenzt, da der Behälter getragen werden muss. Eine mehrmalige Entleerung am Tag kann die Folge sein. Wird nicht rechtzeitig geleert, läuft Flüssigkeit aus und eine Unfallgefahr durch Ausrutschen ist gegeben. Außerdem kommt es zu Verunreinigung und eventuell Beschädigung von betroffenen Gegenständen. Eine erhöhte Unfallgefahr, eine fehlende Hygiene oder Materialverluste sind die Folge. Eine Schadensbehebung und Reinigung erfordern Zeit und Geld und Stören den Betriebsablauf.

Auch ein rechtzeitiges Entleeren des Auffangbehälters hat unerwünschte Nebeneffekte. Da der Behälter getragen werden muss, ist es eine erhebliche körperliche Belastung, welche mit der Länge des Weges bis zum Ort des Entleerens noch zunimmt. Auch ist die Möglichkeit des Verschüttens von Flüssigkeit gegeben und das Unfallrisiko durch Ausrutschen von Personen ist vorhanden. Reinigung und Zeitverlust sind die Folge.

Aufgabe der Erfindung ist es, eine Einrichtung zur Wärmebehandlung von Lebensmitteln vorzuschlagen, mit der die Entsorgung von anfallenden Flüssigkeiten aus einem Wärmebehandlungsgerät auch ohne vorhandene oder durch zusätzlich installierte Abwasseranschlüsse am Betriebsort ermöglicht werden kann. Die aufwendige Verfahrensweise, Flüssigkeiten mittels einer Hebeanlage über weitere Strecken mittels Rohr- oder Schlauchsystem zur nächsten Abflussmöglichkeit zu befördern, soll vermieden werden. Die Einrichtung soll mit geringem Aufwand eine hohe Betriebssicherheit gewährleisten und körperlich schwere Arbeit vermeiden.

Erfindungsgemäß wird die Aufgabe durch die Merkmale des Anspruches 1 gelöst. Ausgestaltende Merkmale sind in den Unteransprüchen 2 bis 15 beschrieben.

Die Einrichtung zur Wärmebehandlung von Lebensmitteln besteht aus einem Wärmebehandlungsgerät und einem Unterbauschrank. Das Wärmebehandlungsgerät kann ein Backofen oder ein Kombidämpfer sein. Die erfindungsgemäße Einrichtung besitzt eine Bedampfungseinrichtung oder ein Reinigungssystem für das Wärmebehandlungsgerät. Meist werden beide Geräteteile vorhanden sein, wodurch die Menge an anfallenden Flüssigkeiten besonders hoch ist.

Im Wärmebehandlungsgerät anfallendes Kondensat und/oder anfallende Reinigungsflüssigkeit wird über mehrere Rohrleitungen in den Unterschrank geleitet, wo sich ein Abwassertank zur Aufnahme des Kondensates und/oder der Reinigungsflüssigkeit befindet. Der Abwassertank ist in eine mobile Tankvorrichtung integriert, die aus einem verfahrbaren Bodenträger besteht, auf dem der Abwassertank befestigt ist.

Der verfahrbare Bodenträger besitzt Laufrollen, die mindestens teilweise lenkbar sein sollten. Der Abwassertank hat mindestens eine Einfüllöffnung sowie eine Entleerungsöffnung. Die Einfüllöffnung kann gleichzeitig als Entlüftungsöffnung genutzt werden. Meist wird jedoch eine extra Entlüftungsöffnung vorhanden sein. Die Entleerungsöffnung ist an ein betätigbares Auslaufventil angeschlossen.

In einer bevorzugten Ausführungsform wird das Kondensat und/oder die Reinigungsflüssigkeit vor der Einleitung in den Abwassertank in einem Zwischenbehälter gesammelt, wobei die Einleitung in den Abwassertank mittels eines Einlaufventiles gesteuert wird.

Der Abwassertank sollte eine Reinigungsöffnung und einen Füllstandssensor besitzen. Vorteilhaft ist es, wenn der Abwassertank an der Einfüllöffnung einen Einfüllstutzen besitzt, in den ein Einfüllrohr für anfallendes Kondensat und/oder Reinigungsflüssigkeit mündet.

Im Unterschrank kann auch eine Wasserentkalkungsanlage zur Aufbereitung von Frischwasser integriert sein.

Am Unterbauschrank können Mittel angebracht sein, beispielsweise ein Formelement, welche beim Schließen der Tür den Betätigungshebel, sofern nicht schon geschlossen, in die geschlossene Stellung bringt.

Am Unterbauschrank sind vorzugsweise Anschläge zur Festlegung der Einfahrtiefe der Tankvorrichtung und Sicherheitsendschalter zur Überwachung der Einfahrtiefe der mobilen Tankvorrichtung bis zur Endposition, vorhanden.

Als Kontrollmechanismus, ob die Tür des Unterbauschrankes geschlossen ist oder nicht, sollte diese mit einem elektromechanischen Türschloss versehen sein.

Zur Ablage von Reinigungsutensilien kann im Innenraum des Unterbauschrankes mittels einer Zwischenwand und eines Bodens ein Ablagefach abgetrennt sein.

Ein Griff am verfahrbaren Bodenträger dient zum Verfahren der mobilen Tankvorrichtung an eine gewünschte Entsorgungsstelle.

Die Einrichtung kann durch eine Steuerungseinrichtung komplettiert werden, die mit dem im Unterbauschrank befindlichen Einlaufventil, dem Türschloss, dem Sicherheitsendschalter und dem Füllstandssensor verbunden ist. Sie steuert und überwacht die Flüssigkeitsaufnahme im Abwassertank.

Die Aufgabe der Erfindung wird insbesondere dadurch gelöst, dass anfallende Flüssigkeit, die durch die praxisübliche Betriebsweise für die Zubereitung bzw. die Wärmebehandlung von Lebensmitteln und die Reinigung mittels Wasser entsteht, in einer Tankvorrichtung gesammelt wird. Art und Größe des Behälters ermöglichen eine kurzfristige Lagerung der Flüssigkeiten, wobei diese Lagerungszeit durch die Betriebsweise des Gerätes bzw. durch den Benutzer positiv bzw. negativ beeinflusst werden kann. Dabei sind Steuerungseinrichtung, Einlaufventil, Türschloss, Sicherheitsendschalter und Füllstandssensor so aufeinander abgestimmt, dass eine in der Praxis notwendige Bedienfreundlichkeit ermöglicht wird. Die Integration der gesamten Tankvorrichtung und aller erforderlichen Bauteile erfolgt im Unterbauschrank. Die Entsorgung der anfallenden Flüssigkeiten erfolgt über einen Bodeneinlauf, der sich problemlos mit der fahrbar gestalteten Tankvorrichtung erreichen lässt. Durch Öffnen des Auslaufventils erfolgt ein Ausströmen der Flüssigkeit aus dem Behälter der Tankvorrichtung. Dabei erlaubt die Dimensionierung des Auslaufventils ein schnelles Auslaufen des Behälters, wodurch ein geringer Zeitaufwand für das Bedienpersonal erforderlich wird.

Das Gerät zur Wärmebehandlung von Lebensmitteln ist mit einem Unterbauschrank mit einem mobilen Abwassertank ausgestattet, welcher sich auf einer Tankvorrichtung mit fahrbaren Rollen befindet.

Die Tankvorrichtung mit dem Abwassertank wird im Untergestell durch den Sicherheitsendschalter in der Endposition überwacht. Der Füllstand des Abwassertanks wird durch den Füllstandsensor überwacht. Bei Öffnung der Tür vom Unterbauschrank wird das Einlaufventil geschlossen. Das Einlaufventil wird nur geöffnet, wenn sich die Tankeinrichtung in Endposition befindet, wenn der maximale Füllstand nicht erreicht ist und wenn die Tür geschlossen ist. Formelemente an der Tür sichern in Verbindung mit einem Betätigungshebel den geschlossenen Zustand des Auslaufventils im eingefahrenen Zustand bei geschlossener Tür. Das Füllvolumen des Abwassertanks sichert die Aufnahme von Flüssigkeiten mehrerer Programmabläufe und auch das normale Beenden eines gestarteten Programmes nach einer Meldung, dass der maximale Füllstand erreicht ist. Bei Erreichen des maximalen Füllstandes wird das laufende Programm normal beendet. Das Gerät schaltet sich aus und kann nicht mehr eingeschalten werden, bevor der Abwassertank geleert wurde.

Die Vorteile der Erfindung bestehen darin, dass die gesamte Einrichtung an jedem beliebigen Ort aufgestellt werden kann, unabhängig davon, ob ein bauseitiger Abfluss am Gerätestandort vorhanden ist. Eine kosten- und zeitintensive Installation eines benötigten Abflusses am Gerätestandort ist nicht notwendig. Es wird keine pumpenbetriebene Hebeanlage zum Befördern von Flüssigkeit zum nächstliegenden Abfluss benötigt. Auch eine Installation eines Rohr- bzw. Schlauchsystems für die Hebeanlage ist nicht erforderlich. Am Aufstellungsort genügt ein Frischwasser- und Stromanschluss. Es erfolgt eine Risikominimierung für den Ausfall von Hebeanlagen oder für Störungen an Rohrleitungen.

Nachfolgend wird die Erfindung an einem Ausführungsbeispiel näher erläutert. Es zeigen:
- Fig. 1: Seitenansicht der Einrichtung
- Fig. 2: Rückansicht der Einrichtung
- Fig. 3: Unteransicht der Einrichtung
- Fig. 4: Schnitt A - A
- Fig. 5: Schnitt B - B
- Fig. 6: mobile Tankvorrichtung

An Hand eines Ladenbackofens soll der Aufbau und die Wirkungsweise einer erfindungsgemäßen Einrichtung dargestellt werden.

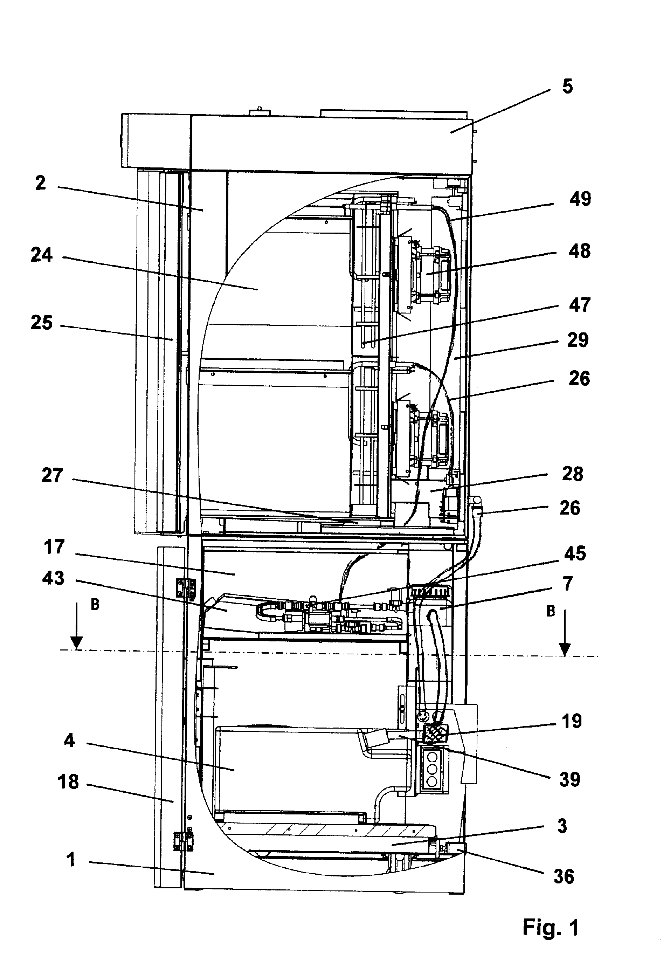

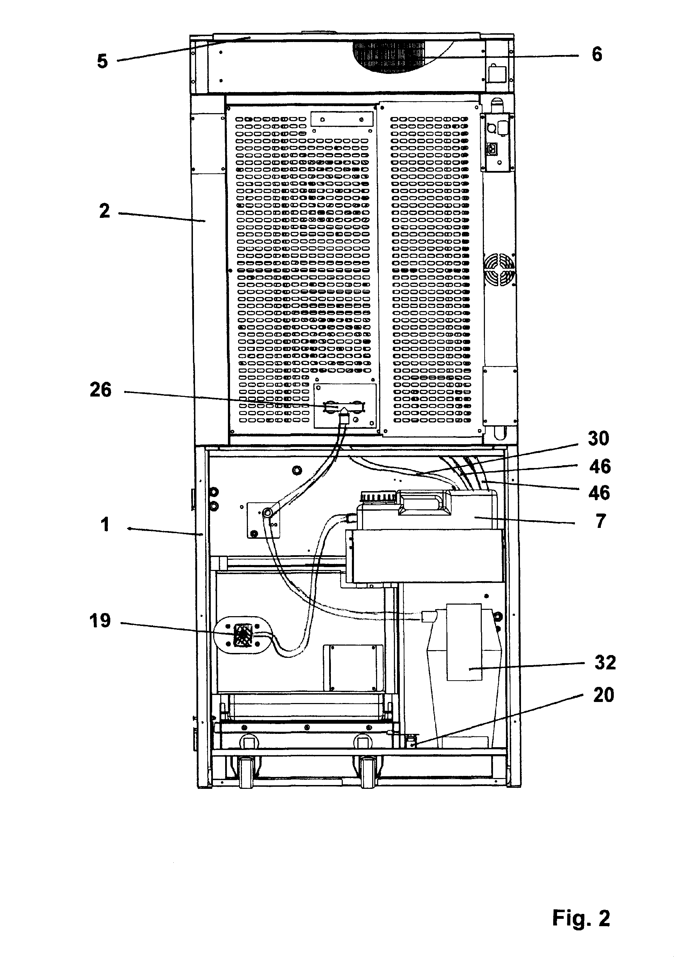

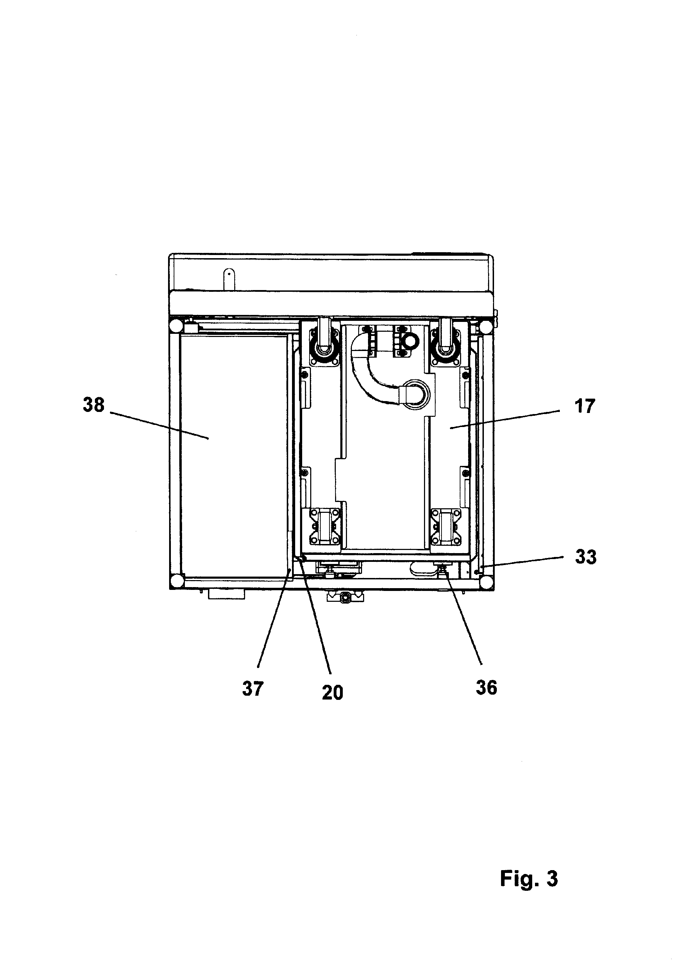

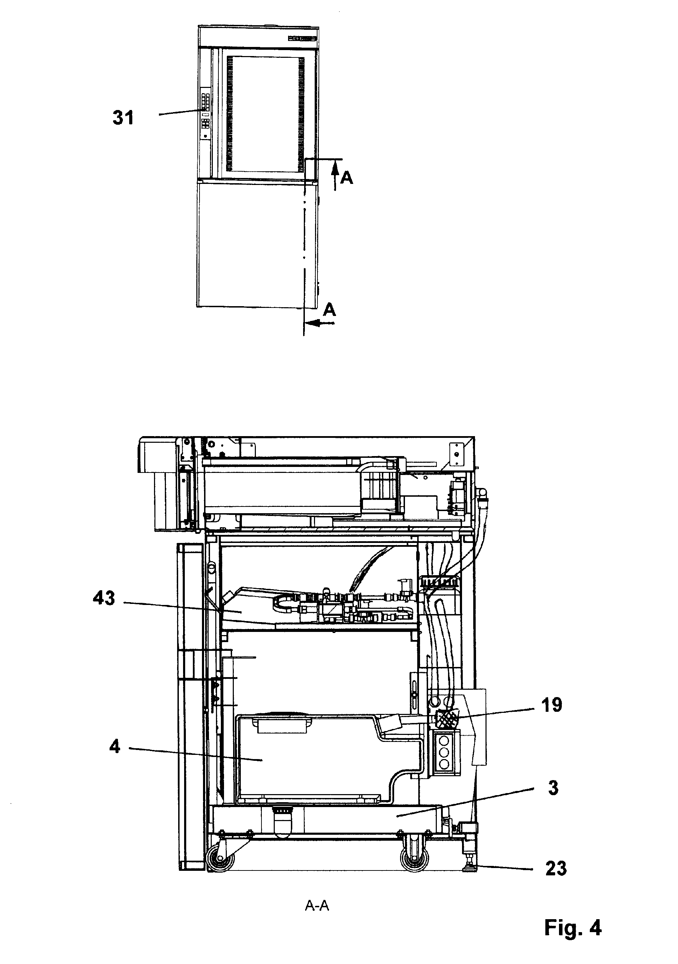

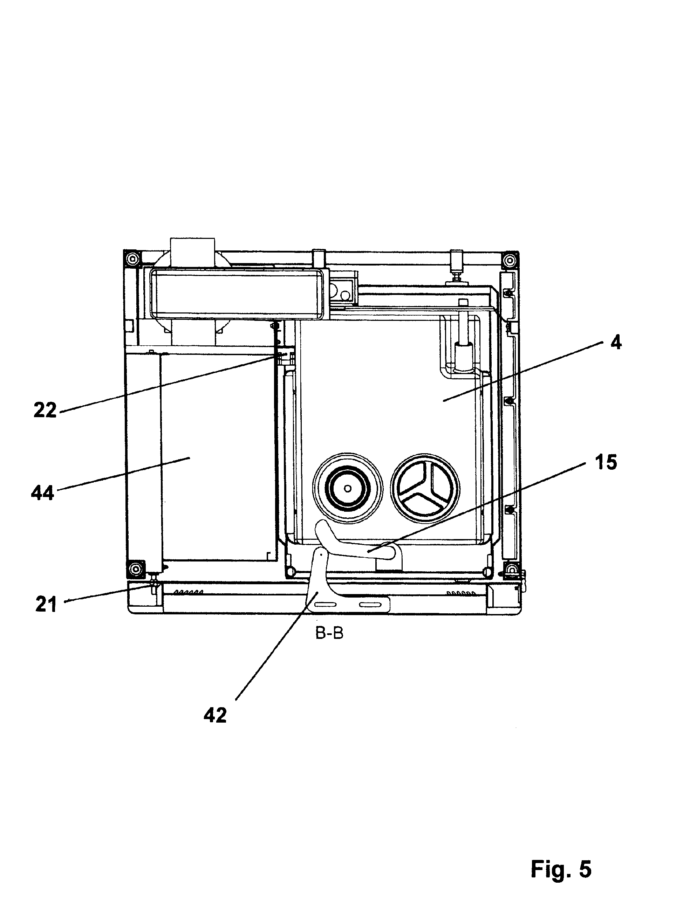

Die in Fig. 1 in Seitenansicht, in Fig. 2 in Rückansicht und Fig. 3 in Unteransicht dargestellte Einrichtung besteht aus einem Backofen als Wärmebehandlungsgerät 2 und einem Unterbauschrank 1. In der Fig. 4 ist ein Schnitt A-A und in Fig. 5 ein Schnitt B-B zu sehen.

Der Ladenbackofen besitzt neben dem eigentlichen Backraum 24 die üblicherweise enthaltenen Bauteile, wie eine Tür 25, eine Heizung 47 und mehrere Ventilatoren 48. Auf dem Backofen befindet sich eine Abzugshaube 5 mit einem Abdampfkondensator 6.

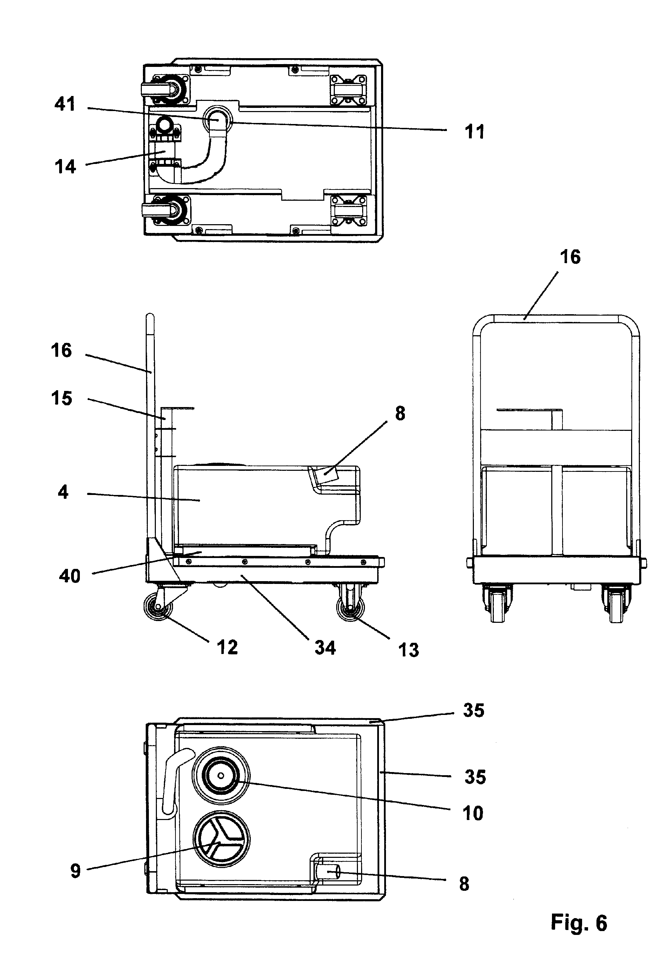

Im Innenraum 17 des Unterbauschrankes 1 befindet sich eine in Fig. 6 nochmals detailliert dargestellte mobile Tankvorrichtung 3 mit einem Abwassertank 4. Ein Reinigungssystem 45 mit einem Reinigungsmitteltank 43 mit entsprechenden Pumpen und Leitungen sowie eine Wasserentkalkungsanlage 32 sind im Unterbauschrank 1 mit integriert.

Beim Backen von Lebensmitteln werden in den vorbereiteten Backofen Teiglinge in den Backraum 24 eingebracht. Eine Steuereinrichtung 31 übernimmt den Programmablauf. Bei Erfordernis kann über Zuführeinrichtungen 26 Wasser oder Dampf dem Backprozess zugeführt werden. Beim Backprozess wird Feuchtigkeit aus den Produkten frei. Diese wird über den Abdampfabgang 28 und die Abdampfleitung 29 zum Abdampfkondensator 6 geleitet. Hier wird ein großer Teil der Feuchtigkeit kondensiert. Das Kondensat läuft über die Kondensatleitungen 46 aus dem Abdampfkondensator 6 oder direkt aus dem Abdampfabgang 28 zu einem Zwischenbehälter 7. Dieser ist mit einem Einlaufventil 19 verbunden. Sofern die Tankvorrichtung 3 mit dem Abwassertank 4 im Unterbauschrank 1 richtig positioniert ist und der Abwassertank 4 nicht voll ist, kann das im Zwischenbehälter 7 gesammelte Kondensat über das Einlaufventil 19 in den Abwassertank 4 laufen.

Nach Bedarf kann das Reinigungssystem 45 gestartet werden. Hier wird ein Reinigungsmittel über eine Reinigungsmittelleitung 49 in den Backraum 24 des Backofens eingebracht und nach einer Einwirkzeit mittels der gleichen Leitung mit Wasser abgespült. Über einen Bodenauslauf 27 gelangt das verdünnte Reinigungsmittel mit dem Schmutz und dem Spülwasser über eine Leitung 30 in den Zwischenbehälter 7. Von dort kann es über das Einlaufventil 19 in den Abwassertank 4 ablaufen.

Der Unterbauschrank 1 ist so aufgebaut, das er eine Tür 18 besitzt, die mit einem Türschloss 21 elektromechanisch verriegelt ist.

Der Innenraum ist begrenzt durch eine senkrechte Zwischenwand 37, gegenüber liegend durch eine verstellbare Einfahrzentrierung 33 und stirnseitig durch verstellbare Anschläge 36. Durch die Zwischenwand 37 wird ein zusätzliches Ablagefach 44 abgetrennt. An der Innenseite der Zwischenwand 37 befindet sich in definierter Höhe ein Füllstandssensor 22. Auf dem Boden 38 vom Ablagefach 44 ist ein Sicherheitsendschalter 20 so angebracht, dass beim Anfahren der mobilen Tankvorrichtung 3 an die Anschläge 36 die Meldung erfolgt, dass sich die Tankvorrichtung 3 mit dem Abwassertank 4 in Endposition befindet. Bei Erreichen dieser Position ist das Einfüllrohr 39 in der als Einfüllstutzen ausgebildeten Einfüllöffnung 8 des Abwassertanks 4 eingeführt. Der Abwassertank 4 besitzt noch eine Reinigungsöffnung 9 sowie eine Entlüftungsöffnung 10.

Die Tankvorrichtung 3 besitzt einem Bodenträger 34 und einen Griff 16. Sie kann mittels am Bodenträger 34 befestigter Lenkrollen 12 und Bockrollen 13 lenkbar verfahren werden. An den beiden Seiten und gegenüber vom Griff 16 sind am Bodenträger 34 Stoßleisten 35 befestigt. Auf dem Bodenträger 34 ist der Abwassertank 4 seitlich mittels Klemmleisten 40 fixiert. Über eine Leitungseinheit 41 wird die Entleerungsöffnung 11 mit dem Auslaufventil 14 verbunden. Der Ablauf des Auslaufventils 14 zeigt nach unten. Das Auslaufventil 14 ist mit einem Betätigungshebel 15 verbunden. Dadurch ist ein ergonomisches Öffnen und Schließen des Auslaufventils 14 gegeben. Außerdem wird durch die Form des Betätigungshebels 15 in Verbindung mit dem Formelement 42 gesichert, dass im eingefahren Zustand der Tankvorrichtung 3 und nach Schließen der Tür 18 auch das Auslaufventil 14 geschlossen ist. Für einen sicheren Stand besitzt der Ladenbackofen verstellbare Maschinenfüße 23.

Der Funktionsablauf des Ladenbackofens ist wie folgt:
Zuerst erfolgt die Öffnung der Tür 18 vom Unterbauschrank 1 mittels der am Backofen untergebrachten Steuereinrichtung 31. Danach kann die mobile Tankvorrichtung 3 in den Unterschrank 1 bis an die Anschläge 36 eingeschoben werden. Durch das Anfahren des Sicherungsendschalters 20 erkennt die Steuereinrichtung 31, dass die mobile Tankvorrichtung 3 ordnungsgemäß eingefahren ist. Das Einfüllrohr 39 wird dabei in den Einfüllstutzen vom Abwassertank 4 eingeführt. Danach erfolgt das Schließen der Tür 18 mittels Handbetätigung. Die Tür 18 fällt in das elektrisch betriebene Türschloss 21. Die Steuereinrichtung 31 am Backofen erkennt, dass Tür 18 geschlossen ist. Zeitgleich öffnet sich das elektromotorisch betriebene Einlaufventil 19. Der Backofen kann über die Steuereinrichtung 31 eingeschaltet werden, um beispielsweise ein Wärmebehandlungsprogramm oder das Reinigungssystem 45 zu starten. Erst jetzt kann Flüssigkeit vom Zwischenbehälter 7 über das Einlaufventil 19 in den Abwassertank 4 der mobilen Tankvorrichtung 3 einlaufen.

Wenn der Abwassertank 4 der mobilen Tankeinrichtung 3 einen definierten Füllstand erreicht hat, wird dieser durch den Füllstandssensor 22 erkannt und signalisiert der Steuereinrichtung 31, dass der Abwassertank 4 voll ist und geleert werden muss. Dazu blinkt in der Steuereinrichtung 31 eine Signallampe. Ein laufendes Programm wird ordnungsgemäß beendet und das Gerät schaltet sich aus. Das Wärmebehandlungsgerät 2 lässt sich nicht mehr anschalten. Erst muss der Abwassertank 4 entleert werden.

Der Bediener öffnet die Tür 18 vom Unterbauschrank 1 mittels Steuereinrichtung 31. Die Steuereinrichtung 31 erkennt dabei, dass die Tür 18 geöffnet wurde. Zeitgleich schließt sich das elektromotorisch betriebene Einlaufventil 19. Die mobile Tankvorrichtung 3 kann aus dem Unterschrank 1 herausgezogen werden. Der Bediener schiebt die mobile Tankvorrichtung 3 beispielsweise nach außen über einem Bodeneinlauf. Er öffnet das Auslaufventil 14 mittels des Betätigungshebels 15 und die enthaltene Flüssigkeit strömt aus dem Abwassertank 4 der Tankvorrichtung 3.

Nach völligem Auslaufen der Flüssigkeit aus dem Abwassertank 4 muss der Bediener das Auslaufventil 14 mittels des Betätigungshebels 15 schließen. Anschließend erfolgt das Einschieben der mobilen Tankvorrichtung 3 in den Unterschrank und der Bediener schließt die Tür 18. Der Ablauf kann von vorn beginnen. Sofern das Auslaufventil 14 nicht oder nicht ganz geschlossen war, wird beim Schließen der Tür 18 das Auslaufventil 14 über den Betätigungshebel 15 und einem zugehörenden, an der Türinnenseite angebrachtes Formelement 42, selbsttätig geschlossen.

### Bezugszeichenaufstellung

- 1: Unterbauschrank
- 2: Wärmebehandlungsgerät
- 3: Tankvorrichtung
- 4: Abwassertank
- 5: Abzugshaube
- 6: Abdampfkondensator
- 7: Zwischenbehälter
- 8: Einfüllöffnung
- 9: Reinigungsöffnung
- 10: Entlüftungsöffnung
- 11: Entleerungsöffnung
- 12: Lenkrollen
- 13: Bockrollen
- 14: Auslaufventil
- 15: Betätigungshebel
- 16: Griff
- 17: Innenraum
- 18: Tür
- 19: Einlaufventil
- 20: Sicherheitsendschalter
- 21: Türschloss
- 22: Füllstandssensor
- 23: Maschinenfüße
- 24: Backraum
- 25: Tür
- 26: Zuführeinrichtungen
- 27: Bodenablauf
- 28: Abdampfabgang
- 29: Abdampfleitung
- 30: Leitung
- 31: Steuereinrichtung
- 32: Wasserentkalkungsanlage
- 33: Einfahrzentrierung
- 34: Bodenträger
- 35: Stoßleisten
- 36: Anschlag
- 37: Zwischenwand
- 38: Boden
- 39: Einfüllrohr
- 40: Klemmleisten
- 41: Leitungseinheit
- 42: Formelement
- 43: Reinigungsmitteltank
- 44: Ablagefach
- 45: Reinigungssystem
- 46: Kondensatleitung
- 47: Heizung
- 48: Ventilator
- 49: Reinigungsmittelleitung

## Patentansprüche

1. Einrichtung zur Wärmebehandlung von Lebensmitteln mit folgenden Merkmalen:
- die Einrichtung besteht aus einem Wärmebehandlungsgerät (2) und einem Unterbauschrank (1),
- die Einrichtung besitzt eine Bedampfungseinrichtung und/oder ein Reinigungssystem für das Wärmebehandlungsgerät (2),
- im Wärmebehandlungsgerät (2) anfallendes Kondensat und/oder anfallende Reinigungsflüssigkeit wird über Leitungen (30) in den Unterschrank (1) geleitet,
- im Unterbauschrank (1) befindet sich ein Abwassertank (4) zur Aufnahme des Kondensates und/oder der Reinigungsflüssigkeit,
- der Abwassertank (4) ist in eine mobile Tankvorrichtung (3) integriert, die aus einem verfahrbaren Bodenträger (34) besteht, auf dem der Abwassertank (4) befestigt ist, wobei der Abwassertank (4) mindestens eine Einfüllöffnung (8) und eine Entleerungsöffnung (11) besitzt und die Entleerungsöffnung (11) an ein betätigbares Auslaufventil (14) angeschlossen ist.

2. Einrichtung nach Anspruch 1, **dadurch gekennzeichnet, dass** das Kondensat und/oder die Reinigungsflüssigkeit vor der Einleitung in den Abwassertank (4) in einen Zwischenbehälter (7) eingeleitet wird, wobei die Einleitung in den Abwassertank (4) mittels eines Einlaufventiles (19) gesteuert wird.

3. Einrichtung nach Anspruch 1 oder 2, **dadurch gekennzeichnet, dass** der Abwassertank (4) eine Reinigungsöffnung (9) besitzt.

4. Einrichtung nach einem der Ansprüche 1 bis 3, **dadurch gekennzeichnet, dass** der Abwassertank (4) eine Entlüftungsöffnung (10) besitzt.

5. Einrichtung nach einem der Ansprüche 1 bis 4, **dadurch gekennzeichnet, dass** der Abwassertank (4) einen Füllstandssensor (22) besitzt.

6. Einrichtung nach einem der Ansprüche 1 bis 5, **dadurch gekennzeichnet, dass** der Abwassertank (4) einen Einfüllstutzen besitzt, in den ein Einfüllrohr (39) für anfallendes Kondensat und/oder Reinigungsflüssigkeit mündet.

7. Einrichtung nach einem der Ansprüche 1 bis 6, **dadurch gekennzeichnet, dass** der verfahrbare Bodenträger (34) lenkbare Rollen (12,13) besitzt.

8. Einrichtung nach einem der Ansprüche 1 bis 7, **dadurch gekennzeichnet, dass** der Unterbauschrank (1) eine verschließbare Tür mit einem elektrischen Türschloss (21) besitzt.

9. Einrichtung nach Anspruch 8, **dadurch gekennzeichnet, dass** am Unterbauschrank (1) Mittel angebracht sind, beispielsweise ein Formelement (42), welches bei einer geschlossenen Tür (18) über einen Betätigungshebel (15) das Auslaufventil (14) in geschlossenen Stellung hält.

10. Einrichtung nach einem der Ansprüche 1 bis 9, **dadurch gekennzeichnet, dass** am Unterbauschrank (1) Anschläge (36) zur Festlegung der Einfahrtiefe der Tankvorrichtung (3) vorhanden sind.

11. Einrichtung nach einem der Ansprüche 1 bis 10, **dadurch gekennzeichnet, dass** am Unterbauschrank (1) Sicherheitsendschalter (20) zur Überwachung der Einfahrtiefe der mobilen Tankvorrichtung (3) bis zur Endposition vorhanden sind.

12. Einrichtung nach einem der Ansprüche 1 bis 11, **dadurch gekennzeichnet, dass** im Innenraum (17) des Unterbauschrankes (1) mittels einer Zwischenwand (37) und eines Bodens (38) ein Ablagefach (47) abgetrennt ist.

13. Einrichtung nach einem der Ansprüche 1 bis 12, **dadurch gekennzeichnet, dass** am verfahrbaren Bodenträger (34) ein Griff (16) zum manuellen Verfahren der mobilen Tankvorrichtung (3) angebracht ist.

14. Einrichtung nach einem der Ansprüche 1 bis 13, **dadurch gekennzeichnet, dass** eine Steuereinrichtung (31) vorhanden ist, die mit einem im Unterbauschrank (1) befindlichen Einlaufventil (19), einem Türschloss (21), einem Sicherheitsendschalter (20) und einem Füllstandssensor (22) verbunden ist und die Flüssigkeitsaufnahme im Abwassertank (4) steuert.

15. Einrichtung nach einem der Ansprüche 1 bis 14, **dadurch gekennzeichnet, dass** im Unterschrank (1) eine Wasserentkalkungsanlage (32) integriert ist.
